# EUROPÄISCHE PATENTSCHRIFT

(11) **EP 2 057 964 B1**
(45) Veröffentlichungstag und Bekanntmachung des Hinweises auf die Patenterteilung: **14.05.2014**
(21) Anmeldenummer: 08018833.7
(22) Anmeldetag: 28.10.2008
(51) Int. Cl.: A61C 13/00

(54) **Vorrichtung und Verfahren zur Verarbeitung von Daten, die Zahnersatzteile betreffen**
Device and method for processing data related to dental prosthesis
Dispositif et procédé destinés au traitement de données concernant des prothèses dentaires

(30) Priorität: 07.11.2007 DE 102007053072
(43) Veröffentlichungstag der Anmeldung: 13.05.2009
(73) Patentinhaber: CAD-FEM GmbH, 85567 Grafing (DE)
(72) Erfinder: Müller, Christoph, 81667 München (DE); Reinshagen, Jörg Werner , Dr., 75177 Pforzheim (DE); von Both, Holger Dirk Rainer, Dr., 75179 Pforzheim (DE); Hellmich, Sven, 76646 Bruchsal (DE)
(74) Vertreter: Jehle, Volker Armin

(56) Entgegenhaltungen:
- EP-A- 1 661 529
- WO-A-2006/077267
- WO-A-2007/045000
- US-A- 6 049 743
- US-A1- 2005 070 782
- US-A1- 2006 093 992
- US-B1- 6 694 212

## Beschreibung

Die Erfindung betrifft eine Vorrichtung und ein Verfahren zur Verarbeitung von Daten, die Zahnersatzteile betreffen.

Des Weiteren betrifft die Erfindung ein computerlesbares Medium mit durch einen Computer ausführbaren Programm-Code-Anweisungen zum Ausführen eines derartigen Verfahrens, sowie ein Computerprogramm mit Programmcode-Mitteln zum Durchführen eines derartigen Verfahrens, wenn das Programm auf einem Computer ausgeführt wird.

Außerdem betrifft die Erfindung ein Zahnersatzteil, das unter Verwendung der beim erfindungsgemäßen Verfahren erzeugten Daten hergestellt wird.

Im Stand der Technik sind unterschiedliche Zahnersatz-Arten bekannt.

Unterschieden wird beispielsweise zwischen einem herausnehmbaren Zahnersatz, und einem festsitzenden Zahnersatz.

Ein herausnehmbarer Zahnersatz ist eine Prothese, die z.B. auf der Mundschleimhaut aufliegt, und - im Idealfall - mehrmals am Tag aus dem Mund genommen, und gereinigt wird.

Als herausnehmbarer Zahnersatz kommen z.B. Kunststoffprothesen mit aus Draht gebogenen Halte- und Stützvorrichtungen (Klammern) zum Einsatz, sowie z.B. Modellgussprothesen mit gegossenen Halte- und Stützvorrichtungen, und sog. Teleskopprothesen, die auf überkronten Zähnen sitzen.

Ein festsitzender Zahnersatz wie z.B. eine Krone oder eine Brücke kann z.B. aus Metall oder Keramik oder Kunststoff gefertigt werden, und z.B. auf - als "Pfeiler" dienenden - Zahnstümpfen oder Zahnimplantaten befestigt werden, z.B. mittels Zement, oder einem beliebigen Klebstoff / einem anderen Befestigungsmaterial.

Im Stand der Technik erfolgt nach Präparation der Pfeiler (Zahnstümpfe, Zahnimplantate, oder Stiftaufbauten) zunächst eine "Abformung" der Situation im Mund im Bereich des herzustellenden Zahnersatzes, z.B. mittels eines entsprechenden Negativ-Abdrucks, welcher in einem Dentallabor in ein Positiv-Modell, z.B. ein Gips-Modell umgewandelt wird, das genau der Situation im Mund entspricht.

Daraufhin stellen Zahntechniker mit erheblichem technischen Aufwand feinhandwerklich die jeweilige Brücke oder Krone, bzw. Teil-, oder Interimsprothese, etc. her (z.B. manuell und/oder softwareunterstützt).

Um sicherzustellen, dass die jeweilige - relativ teuere - Brücke bzw. Krone auf jeden Fall ausreichend stabil ist, wird diese bzw. Teile hiervon vom jeweiligen Zahntechniker häufig stärker dimensioniert, als physikalisch erforderlich wäre. Dies führt zu Mehrkosten, und zu ästhetischen Nachteilen.

Dokument WO 2007/045000 offenbart ein Verfahren zur Verarbeitung von Daten, die Zahnersatzteile betreffen, das die Schritte aufweist:
- Erzeugen digitaler Daten, die eine Situation im Mund repräsentieren ;
- Erzeugen digitaler Daten, die ein Zahnersatzteil repräsentieren, unter Verwendung der digitalen Daten, die die Situation im Mund repräsentieren, bzw. unter Verwendung von Daten, die unter Verwendung der digitalen Daten erzeugt werden, die die Situation im Mund repräsentieren;
- Erzeugen von zur Herstellung des Zahnersatzteils verwendbaren digitalen CAM-Produktions-Daten unter Verwendung der digitalen Daten, die ein Zahnersatzteil repräsentieren bzw. unter Verwendung von Daten, die unter Verwendung der digitalen Daten, die ein Zahnersatzteil repräsentieren erzeugt werden; und
- Durchführen einer FEM (Finite Elemente Methode) Simulation basierend auf den digitalen Produktions-Daten bzw. auf Daten, die unter Verwendung der digitalen Produktions-Daten erzeugt werden.

Dokument US 2006/093992 A1 offenbart ein Verfahren zur Verarbeitung von Daten, die orthodontische Schienen betreffen, welche folgende Schritte aufweist:
- Erzeugen digitaler Daten, die eine Situation im Mund repräsentieren;
- Erzeugen digitaler Daten, die ein Zahnersatzteil repräsentieren, unter Verwendung der digitalen Daten, die die Situation im Mund repräsentieren; und
- Glätten der digitalen Daten, die das Zahnersatzteil repräsentieren, unter Verwendung eines CAD- (Computer Aided Design-) Softwareprogramms;
- Erzeugen von zur Herstellung des Zahnersatzteils verwendbaren digitalen Produktions-Daten unter Verwendung der geglätteten digitalen Daten bzw. unter Verwendung von Daten, die unter Verwendung der geglätteten digitalen Daten erzeugt werden,
wobei die Größe des Fräskopfes und die verschiedene Parameter der Herstellungsanlage ("manufacturing equipment") beim Erzeugen der Produktions-Daten zu berücksichtigen sind. Diese Parametern werden beim Glätten mitberücksichtigt, so dass weniger Diskrepanz zwischen der damit hergestellten Schiene und der digital modellierten Schiene entsteht.

Der Erfindung liegt u.a. die Aufgabe zugrunde, eine neuartige Vorrichtung und ein neuartiges Verfahren zur Verarbeitung von Daten, die Zahnersatzteile betreffen bereitzustellen.

Sie erreicht dieses und weitere Ziele durch die Gegenstände der Ansprüche 1, 7, und 13 - 15.

Vorteilhafte Weiterbildungen der Erfindung sind in den Unteransprüchen angegeben.

Im Folgenden wird die Erfindung unter Bezug auf mehrere Ausführungsbeispiele und die beigefügte Zeichnung näher erläutert. In der Zeichnung zeigt:
Figur 1 eine schematische beispielhafte Darstellung mehrerer bei einem Verfahren zur Verarbeitung von Daten, die Zahnersatzteile, insbesondere Brücken betreffen gemäß einem Ausführungsbeispiel der Erfindung durchführbarer Verfahrens-Schritte;
Figur 2 eine schematische beispielhafte Darstellung eines Daten-Glättungs-Vorgangs;
Figur 3 eine schematische beispielhafte Darstellung der Elemente und Verbinder eines Brücken-Zahnersatzteils, das auf als Pfeiler dienenden Zahnstümpfen, Zahnimplantaten oder Stiftaufbauten befestigt werden kann;
Figur 4 eine weitere schematische beispielhafte Darstellung der Elemente und Verbinder eines Brücken-Zahnersatzteils;
Figuren 5, 6 weitere schematische beispielhafte Darstellungen, mit denen Möglichkeiten der Erzeugung von Kieferknochen-Modellen veranschaulicht werden.
Figur 7 weitere schematische beispielhafte Darstellungen, mit denen Möglichkeiten zur Zahnersatzteil-Lagerung bei der Durchführung entsprechender Simulationen veranschaulicht werden.

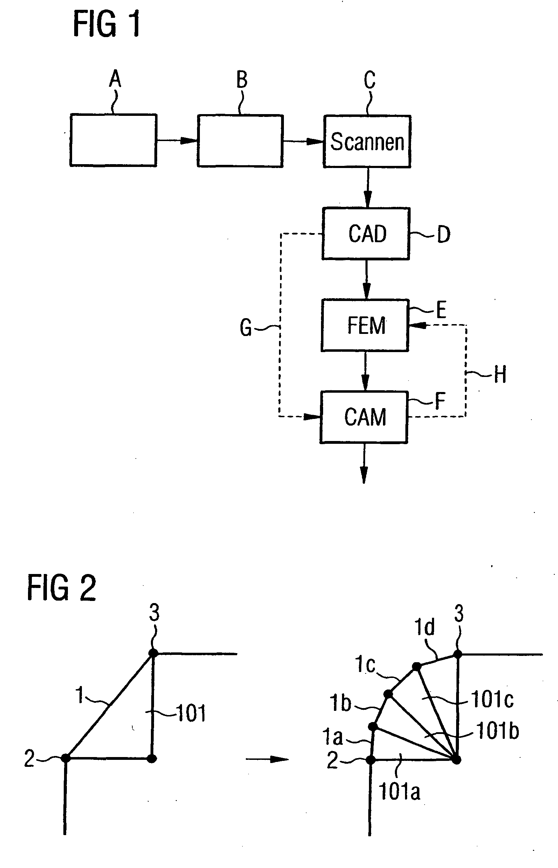

In Figur 1 ist eine schematische Darstellung mehrerer bei einem Verfahren zur Verarbeitung von Daten, die Zahnersatzteile betreffen durchgeführter Verfahrens-Schritte gezeigt.

Bei dem Zahnersatzteil kann es sich um ein beliebiges Zahnersatzteil handeln, z.B. um ein herausnehmbares oder ein festsitzendes Zahnersatzteil, eine Interimsprothese, ein Langzeitprovisorium, etc., z.B. eine Krone, Brücke, Prothese (z.B. Kunststoffprothese, Modellgussprothese, Teleskopprothese, etc.), oder ein beliebiges Teil hiervon.

Das Zahnersatzteil kann aus einem beliebigen Material hergestellt sein, bzw. aus beliebigen, verschiedenen Materialkombinationen, z.B. Metall und/oder Keramik und/oder Zirkoniumdioxid, Al₂O₃ und/oder Titanlegierungen, Titan, und/oder Kunststoff, Glaskeramik, Verbund aus Zirkonoxid bzw. Al₂O₃ und Verblendkeramik etc., etc.

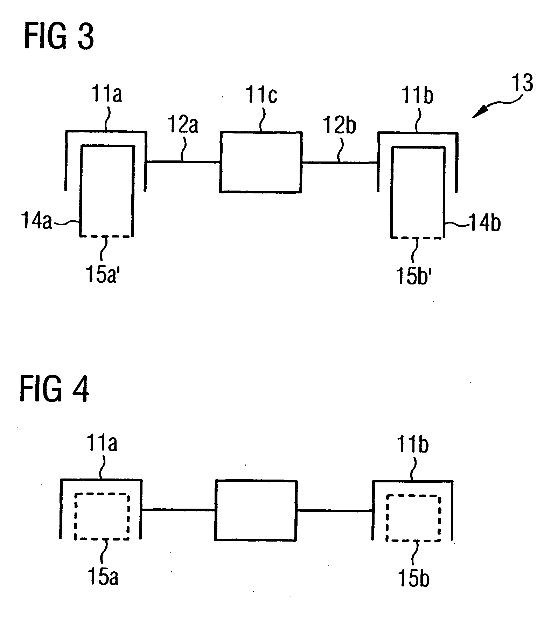

Beispielsweise kann es sich bei dem Zahnersatzteil - wie in Figur 3 schematisch veranschaulicht ist - um eine Brücke 13 handeln, bei der ein erstes Element bzw. Glied 11 a über einen ersten Verbinder bzw. Steg 12a mit einem zweiten Element bzw. Glied 11c verbunden ist, welches über einen zweiten Verbinder bzw. Steg 12b mit einem dritten Element bzw. Glied 11b verbunden ist.

Das erste Element 11a und das dritte Element 11b können - wie ebenfalls in Figur 3 schematisch veranschaulicht ist - nach der Herstellung des Zahnersatzteils 13 auf als Pfeiler 14a, 14b dienenden Zahnstümpfen, Zahnimplantaten oder Stiftaufbauten befestigt werden.

Die Brücke 13 kann auch mehr oder weniger Elemente 11a, 11b, 11c aufweisen, als in Figur 3 dargestellt, z.B. mehr als drei, fünf, oder zehn Elemente, z.B. bis zu sechzehn Elemente, oder z.B. lediglich zwei Elemente, etc. Entsprechend können auch mehr oder weniger Pfeiler verwendet werden, als oben beschrieben.

Die Brücke 13 besteht aus einem Gerüst, oder aus einem Gerüst und einer entsprechenden Verblendung, die z.B. per Schichtung oder Überpresstechnik oder einem anderen Verfahren (Kunststoffverblendung etc.) auf dem Gerüst aufgebracht werden kann. Die Verblendung kann z.B. aus entsprechenden Verblend- oder Presskeramiken gefertigt sein, und das Gerüst z.B. aus Zirkonoxid, Aluminiumoxid, Keramik, Metall, z.B. einem entsprechenden Edelmetall oder Nichtedelmetall, z.B. Titan, entsprechenden Titanlegierungen, oder aus Kunststoff (z.B. PMMA, PEAK), etc.

Wie in Figur 1 schematisch veranschaulicht, erfolgt bei der Herstellung eines Zahnersatzteils - ggf., z.B. falls es sich bei dem Zahnersatzteil um eine Brücke handelt nach Präparation der o.g. Pfeiler (Zahnstümpfe oder Zahnimplantate, Stiftaufbauten) im Mundraum des Patienten - zunächst eine "Abformung" der Situation im Mund im Bereich des herzustellenden Zahnersatzteils.

Dabei wird entsprechend identisch oder ähnlich wie bei herkömmlichen Verfahren - z.B. beim jeweiligen Zahnarzt, oder in der Zahnklinik, etc. - ein entsprechender Negativ-Abdruck der Mund-Situation hergestellt (Schritt A).

Aus der "Abformung" bzw. dem Negativ-Abdruck wird - ebenfalls entsprechend identisch oder ähnlich wie bei herkömmlichen Verfahren, und z.B. in einem Dentallabor - ein Positiv-Modell, z.B. ein Gips-Modell erstellt, das genau bzw. relativ genau der Situation im Mund entspricht (Schritt B).

Das Gips-Modell wird daraufhin gescannt, z.B. mittels eines entsprechenden Scanners der Fa. Wieland, d.h., es findet - z.B. mittels eines entsprechenden Scan- oder CAD- (Computer Aided Design-) Softwareprogramms - eine entsprechende Digitalisierung statt (Schritt C). Stattdessen kann alternativ auch - ohne Herstellung eines Negativ-Abdrucks / Gips-Modells - direkt die Situation im Mund gescannt werden (Schritt C'). Alternativ kann auch ein entsprechendes Abdruckscan-, bzw. Micro-CT-Verfahren verwendet werden, bzw. kann ein real existierendes Zahnersatzteil, z.B. eine Brücke gescannt werden - z.B., um mit Hilfe des vorliegenden Verfahrens diese auf ihre Festigkeit hin zu untersuchen (Schritt C").

Die vom jeweiligen Scanner bereitgestellten - digitalen - Daten (Punktewolken) liegen z.B. im STL-Format vor. Die STL-Daten können z.B. entsprechende Abtastpunkt-Koordinaten-Daten sein, wobei von den Abtastpunkten (Punktewolken) bzw. Scanpunkten ein entsprechendes - die Situation im Mund digital repräsentierendes - "Netz" aufgespannt wird.

Daraufhin wird - entsprechend ähnlich wie herkömmlich - basierend auf den die Situation im Mund widerspiegelnden STL-Daten ein STL-Modell-Entwurf des herzustellenden Zahnersatzteils erstellt, z.B. von einem Zahntechniker.

Dies kann mit Hilfe des o.g. oder eines (weiteren) CAD-Softwareprogramms erfolgen, das z.B. auf einer Speichereinrichtung des o.g. Scanners oder einer beliebigen anderen Speichereinrichtung gespeichert sein kann, oder z.B. mit einem beliebigen anderen (z.B. auf einer Speichereinrichtung eines separaten Rechners gespeicherten) CAD-Softwareprogramm bzw. -Modul, bzw. einer entsprechenden Software-Automatikroutine.

Auf diese Weise wird ein Daten-Satz, insbesondere STL-Daten-Satz erzeugt, der entsprechende Netz-Punkt-Koordinaten-Daten enthält, wobei von sämtlichen Netz-Punkten gemeinsam ein entsprechendes - den jeweiligen Zahnersatzteil-Entwurf digital repräsentierendes - Netz aufgespannt wird (vgl. auch Figur 2, links, und die dort gezeigten Netz-Punkte 2, 3).

Wie weiter unten genauer erläutert, wird in einem späteren Schritt an einem entsprechenden Rechner mit Hilfe eines auf dessen Speichereinrichtung oder einer beliebigen anderen Speichereinrichtung gespeicherten Simulations-Softwareprogramms (Computerprogrammprodukt) eine auf einer Finite-Elemente-Methode (FEM bzw. Finite Elements Method) beruhende Simulation durchgeführt, bzw. das herzustellende Zahnersatzteil mit Hilfe einer entsprechenden Finite-Elemente-Methode untersucht.

Allerdings ist festgestellt worden, dass die vom CAD-Programm / Scanner bzw. vom o.g. Rechner gelieferten digitalen Daten, insbesondere STL-Daten häufig nicht so beschaffen sind, dass aus diesen ein entsprechend gutes bzw. zu guten Simulations-Ergebnissen führendes FEM-Netz erzeugt werden könnte.

Deshalb erfolgt - bei einer ersten Variante des vorliegenden Ausführungsbeispiels - zunächst eine entsprechende Glättung der STL-Daten (vgl. Figur 1, Schritt D). Die Glättung kann z.B. an einem entsprechenden (separaten) Rechner mit Hilfe eines auf dessen Speichereinrichtung oder einer beliebigen anderen Speichereinrichtung gespeicherten Softwareprogramms erfolgen, oder alternativ durch den o.g. Scanner selbst, d.h. z.B. mit Hilfe des auf dessen Speichereinrichtung oder einer beliebigen anderen Speichereinrichtung gespeicherten (oder eines separaten, weiteren) CAD-Softwareprogramms, oder auf beliebige andere Weise. Diese Glättung kann z.B. auch so sein, dass das Zahnersatzteil nach der Glättung der real existierenden, bei dem Fräsvorgang erstellten Geometrie entspricht. Dabei kann auch die Fräslogik (Fräsbahnen / Fräskopfgeometrie) bereits berücksichtigt werden (s.u.).

Durch die Glättung können z.B. - wie in Figur 2 links veranschaulicht - entsprechende Sehnen 1 zwischen Netz-Punkten 2, 3 des o.g. STL-Netzes an relativ abrupten Übergängen des jeweiligen Zahnersatzteils in entsprechende - einen "sanfteren" Übergang schaffende - Sehnenzüge aus mehreren Einzel-Sehnen 1a, 1b, 1c, 1d umgewandelt werden (bzw. kann ein von mehreren Netz-Punkten 2, 3 umschlossenes Vieleck 101 zur "Glättung" in mehrere separate Vielecke 101a, 101b, 101 c, etc. aufgeteilt werden), etc.

Die o.g. "Glättung" der Übergänge ist z.B. auch deshalb wichtig, da die o.g. abrupten Übergänge häufig an kritischen Stellen des Zahnersatzteils anzutreffen sind, z.B. am Übergang zwischen einem Element bzw. Glied 11a, 11b, 11c, und einem Verbinder bzw. Steg 12a, 12b eines Brücken-Zahnersatzteils 13 (vgl. Figur 3).

Basierend auf den geglätteten STL-Daten wird wie weiter unten noch genauer erläutert wird zur Durchführung einer auf der Finite-Elemente-Methode (FEM bzw. Finite Elements Method) beruhenden Simulation bzw. Untersuchung des herzustellenden Zahnersatzteils ein FEM-Netz erzeugt.

Dies kann mit Hilfe eines auf einer Speichereinrichtung eines separaten Rechners oder einer beliebigen anderen Speichereinrichtung gespeicherten FEM-Simulations-Softwareprogramms erfolgen, bzw. einer entsprechenden FEM-Vernetzungssoftware, oder alternativ durch den o.g. Scanner selbst, d.h. mit Hilfe eines auf dessen Speichereinrichtung oder einer beliebigen anderen Speichereinrichtung gespeicherten CAD- bzw. FEM-Simulations-Softwareprogramms, oder auf beliebige andere Weise.

Basierend auf den FEM-Netz-Daten wird dann durch das FEM-Simulations-Softwareprogramm eine Simulation bzw. Untersuchung des o.g. - z.B. vom Zahntechniker (oder einem beliebigen anderen Anwender) erstellten - Zahnersatzteil-Entwurfs durchgeführt (Schritt E). Simuliert werden kann z.B. das Gerüst einer Brücke, oder z.B. das Gerüst und die entsprechende Verblendung einer Brücke (incl. z.B. der Haftverbunde zwischen dem Gerüst/Krone und der Verblendung, Kiefer zu Implantat zu Abutment zu Krone zu Verblendung (Haftverbund), etc.).

Dabei können z.B. (wie weiter unten noch genauer erläutert wird) beim späteren realen Einsatz des Zahnersatzteils auftretende mechanische Belastungen simuliert werden. Dadurch kann ermittelt werden, welche Teile des Zahnersatzteils vom jeweiligen Anwender / Zahntechniker zu schwach oder unnötig stark dimensioniert oder ungeschickt positioniert wurden.

Zu schwach dimensionierte Teile (z.B. einzelne Abschnitte der in Figur 3 gezeigten Brücken-Stege bzw. -Verbinder 12a, 12b, oder Übergänge zwischen einem jeweiligen Brücken-Steg bzw. -Verbinder 12a, 12b und einem jeweiligen Brücken-Glied bzw. -Element 11a, 11b, 11c) können gesteuert durch das FEM-Simulations-Softwareprogramm auf dem Bildschirm des jeweiligen Rechners entsprechend gekennzeichnet werden, z.B. mit einer bestimmten, ersten Farbe (oder auf beliebige andere Weise), und unnötig stark dimensionierte weitere Teile auf hiervon unterschiedliche Weise, z.B. mit einer zweiten, von der ersten Farbe unterschiedlichen Farbe (und weder zu stark noch zu schwach dimensionierte Teile z.B. mit einer dritten, von der ersten und zweiten Farbe unterschiedlichen Farbe, oder auf beliebige andere Weise).

Alternativ oder zusätzlich kann gesteuert durch das FEM-Simulations-Softwareprogramm auch die Stärke der jeweiligen Über- oder Unterdimensionierung am Bildschirm gekennzeichnet werden (z.B. durch unterschiedliche Helligkeits-Werte, oder auf beliebige andere Weise).

Allgemein formuliert kann die Stärke und Schwäche der jeweiligen Dimensionierung also mit Hilfe einer entsprechenden Farb- und/oder Helligkeits-Skalierung angezeigt werden.

Basierend auf der FEM-Simulation kann der jeweilige Anwender / Zahntechniker den (zunächst) erstellten Modell-Entwurf des herzustellenden Zahnersatzteils entsprechend ändern, woraufhin - optional (und entsprechend wie oben beschrieben) - eine erneute FEM-Simulation durchgeführt werden kann, etc., etc. Alternativ oder zusätzlich kann die Änderung des zunächst erstellten Modell-Entwurfs auch automatisiert erfolgen. Dabei wird - z.B. gesteuert durch das FEM-Softwareprogramm - der erste Modell-Entwurf so abgeändert, dass der geänderte Modell-Entwurf des Zahnersatzteils weder zu schwach noch unnötig stark dimensionierte Teile aufweist (durch Hinzufügen von Material bei unterdimensionierten Gebieten, und Wegnehmen von Material bei überdimensionierten Gebieten). Hierzu können z.B. entsprechende mathematische Topologie-Optimierungs-Verfahren verwendet werden, z.B. mathematische Verfahren nach Matthek, etc.

Auf Basis der geänderten, optimierten Geometrie bzw. den (FEM-Netz-)Daten des geänderten Modell-Entwurfs kann automatisch ein (neuer) Eingabe-Satz für das CAD-Softwareprogramm oder direkt für ein CAM- (Computer-Aided-Manufacturing-) Softwareprogramm erzeugt werden (d.h. z.B. ein entsprechender CAM-Datensatz).

Basierend auf den Daten des geänderten Modell-Entwurfs bzw. den entsprechenden, geänderten "CAD"- (STL-) Daten werden dann - entsprechend ähnlich wie herkömmlich - z.B. mit Hilfe eines entsprechenden CAM- (Computer-Aided-Manufacturing-) Softwareprogramms die zur automatisierten Herstellung des Zahnersatzteils notwendigen Produktions-Daten erzeugt, z.B. entsprechende Fräsparameter bzw. Fräsbahndaten, etc. für eine entsprechende Fräs- und/oder Sinter- und/oder Verblendmaschine (Schritt F). Das CAM- (Computer-Aided-Manufacturing-) Softwareprogramm kann z.B. auf einer Speichereinrichtung eines separaten Rechners abgespeichert sein, oder z.B. der Speichereinrichtung des o.g. Scanners, oder einer beliebigen anderen Speichereinrichtung.

Daraufhin kann - basierend auf den o.g., von dem CAM- (Computer-Aided-Manufacturing-) Softwareprogramm gelieferten Daten - das Zahnersatzteil gefertigt werden, z.B. durch entsprechendes Fräsen, Sintern, Verblenden, etc.

Beispielsweise kann basierend auf den vom CAM-Softwareprogramm gelieferten Daten zunächst das Gerüst einer entsprechenden Brücke gefräst, und anschließend gesintert werden, woraufhin das gefräste und gesinterte Brücken-Gerüst z.B. entsprechend verblended wird (wobei z.B. durch Hartbearbeitung erstellte Brücken/Kronen etc. i.A. keine Verblendung erfordern).

Bei einer alternativen, zweiten Variante des vorliegenden Ausführungsbeispiels kann (zunächst) auf die oben beschriebene Glättung der STL-Daten, und (zunächst) auf die oben beschriebene FEM-Simulation verzichtet werden.

Stattdessen werden - wie in Figur 1 anhand des gestrichelten Pfeils G veranschaulicht - basierend auf den (ungeglätteten) (STL-)Daten des auf die o.g. Weise z.B. vom Zahntechniker erstellten ursprünglichen, unveränderten Modell-Entwurfs für das herzustellende Zahnersatzteil - entsprechend ähnlich wie herkömmlich mit Hilfe eines entsprechenden CAM- (Computer-Aided-Manufacturing-) Softwareprogramms die entsprechenden (eigentlich) zur automatisierten Herstellung des Zahnersatzteils gedachten Produktions-Daten erzeugt, z.B. entsprechende Fräsparameter bzw. Fräsbahndaten, etc.

Basierend auf den vom CAM- (Computer-Aided-Manufacturing-) Softwareprogramm erzeugten (Produktions- bzw. CAM-)Daten oder internen Daten des CAM wird dann zur Durchführung einer auf der Finite-Elemente-Methode (FEM bzw. Finite Elements Method) beruhenden Simulation bzw. Untersuchung des herzustellenden Zahnersatzteils ein FEM-Netz erzeugt (wie in Figur 1 anhand des gestrichelten Pfeils H veranschaulicht). Alternativ wird aus den vom CAM-Softwareprogramm erzeugten Daten zunächst eine neue Geometrie, z.B. eine entsprechende STL-Datei erzeugt, die der (eigentlich) zu fräsenden Geometrie entspricht, und die als Grundlage für eine entsprechende FEM-Vemetzung verwendet wird.

Beide Varianten können unter Verwendung eines auf einer Speichereinrichtung des o.g. oder eines separaten Rechners oder einer beliebigen anderen Speichereinrichtung gespeicherten FEM-Simulations-Softwareprogramms durchgeführt werden, bzw. einer entsprechenden FEM-Vernetzungssoftware, oder alternativ auf beliebige andere Weise, z.B. durch den o.g. Scanner, d.h. mit Hilfe eines auf dessen Speichereinrichtung oder einer beliebigen anderen Speichereinrichtung gespeicherten FEM-Simulations-Softwareprogramms, etc.

Basierend auf den FEM-Netz-Daten wird dann durch das FEM-Simulations-Softwareprogramm eine Simulation bzw. Untersuchung des o.g. Zahnersatzteil-Entwurfs durchgeführt (entsprechend wie beim o.g. Schritt E).

Dabei können entsprechend wie oben beschrieben beim späteren realen Einsatz des Zahnersatzteils auftretende mechanische Belastungen simuliert werden. Dadurch kann ermittelt werden, welche Teile des Zahnersatzteils zu schwach oder unnötig stark dimensioniert oder ungeschickt positioniert sind.

Zu schwach dimensionierte Teile können - entsprechend wie oben beschrieben - gesteuert durch das FEM-Simulations-Softwareprogramm auf dem Bildschirm des jeweiligen Rechners entsprechend gekennzeichnet werden, z.B. mit einer bestimmten, ersten Farbe (oder auf beliebige andere Weise), und unnötig stark dimensionierte weitere Teile auf hiervon unterschiedliche Weise, z.B. mit einer zweiten, von der ersten Farbe unterschiedlichen Farbe (und weder zu stark noch zu schwach dimensionierte oder ungeschickt positioniert Teile z.B. mit einer dritten, von der ersten und zweiten Farbe unterschiedlichen Farbe, oder auf beliebige andere Weise).

Alternativ oder zusätzlich kann gesteuert durch das FEM-Simulations-Softwareprogramm auch die Stärke der jeweiligen Über- oder Unterdimensionierung am Bildschirm gekennzeichnet werden (z.B. durch unterschiedliche Helligkeits-Werte, oder auf beliebige andere Weise).

Basierend auf der FEM-Simulation kann der Zahntechniker den (zunächst) erstellten Modell-Entwurf des herzustellenden Zahnersatzteils entsprechend ändern, woraufhin - optional (und entsprechend wie oben beschrieben) - eine erneute FEM-Simulation durchgeführt werden kann. Alternativ oder zusätzlich kann die Änderung des zunächst erstellten Modell-Entwurfs auch automatisiert erfolgen. Hierzu können z.B. entsprechende mathematische Topologie-Optimierungs-Verfahren verwendet werden, z.B. mathematische Verfahren nach Matthek, etc.

Dadurch, dass die Grundlage der FEM-Simulation die o.g. CAM-Daten bzw. interne Daten des CAM sind, wird - quasi automatisch - mit stärker geglätteten Daten gearbeitet, als dann, wenn der FEM-Simulation entsprechende - ungeglättte - STL-Daten zugrundegelegt werden (z.B. deshalb, weil die o.g. CAM-Daten Fräsbahn-Daten sind, die die Rundheit des Fräskopfs bzw. Fräsradien, etc. berücksichtigen, und damit einhergehend automatisch zu relativ wenig abrupten bzw. relativ "sanften" Übergängen führen). Des Weiteren führt die o.g. Vorgehensweise dazu, dass die FEM-Simulations-Berechnung auf Basis der realen Fertigungs-Geometrie erfolgt, unter Berücksichtigung der - tatsächlichen - Fräsbahnen, insbesondere der Fräskopfgeometrie, bzw. der entsprechenden - tatsächlichen - Fräßlogik bzw. -Strategie, was die Qualität des erzielten (finalen) (FEM-)Modell-Entwurfs erhöht.

Bei einer weiteren alternativen, dritten Variante des vorliegenden Ausführungsbeispiels wird zunächst entsprechend wie oben im Zusammenhang mit der ersten Variante beschrieben eine Glättung der - einen z.B. von einem Zahntechniker erstellten STL-Modell-Entwurf des herzustellenden Zahnersatzteils repräsentierenden - STL-Daten durchgeführt, daraufhin aber anders als bei der o.g. ersten Variante nicht gleich eine entsprechende FEM-Simulation durchgeführt, sondern zunächst - ähnlich wie bei der o.g. zweiten Variante - aus den (anders als bei der zweiten Variante geglätteten) STL-Daten entsprechende CAM-Daten erzeugt, und - ähnlich wie bei der zweiten Variante (und im Unterschied zur ersten Variante) - basierend auf den vom CAM-Softwareprogramm gelieferten CAM-Daten eine entsprechende FEM-Simulation durchgeführt.

Bei sämtlichen der o.g. Varianten und beliebigen weiteren Varianten der Erfindung können für die jeweilige Geometriebeschreibung z.B. die folgenden Datenformate verwendet werden:
a) Punktwolken-Datenformat: Der Vernetzung liegt eine endliche Anzahl unterschiedlicher Punkte auf der Geometrieoberfläche des Zahnersatzteil-Modells zugrunde. Jeder Punkt hat mindestens eine x-, y- und z-Koordinate, ggf. sind sämtlichen oder einem Teil der Punkte weitere Zusatzinformationen zugeordnet.
b) facettierte Oberfläche: Eine facettierte Oberfläche besteht typischerweise aus einer endlichen Anzahl an zusammenhängenden Dreiecken. Zusammenhängend bedeutet, dass die Ecken der Dreiecke dieselbe Koordinate haben. Jedes Dreieck kann entweder eigene Ecken haben oder die Ecken mit den benachbarten Dreiecken teilen. Zusätzlich kann jedem Dreieck eine Normalenrichtung zugewiesen werden. Ein typisches Format einer facettierten Oberfläche stellt das oben erwähnte STL-Format dar.
c) CAD - Format bzw. analytische Oberflächenbeschreibung, z.B. das IGES- bzw. STEP-Format, die gängige CAD-Programme ausgeben (z.B. Catia, etc..).

Die Vernetzung der Geometrie kann jeweils weitestgehend automatisch erfolgen. Der Anwender, z.B. der jeweilige Zahntechniker kann ggf. manuelle Einstellungen vornehmen. Die Geometrie wird beispielsweise mit Tetraederelementen vernetzt. Die Tetraederelemente können entweder linear (ohne Mittenknoten) oder - besonders vorteilhaft - quadratisch (mit Mittenkoten) erstellt sein. Das FEM-Netz kann neben den Tetraederelementen auch andere Elementformen (Hexaeder, Pentaeder, Pyramiden) enthalten. Die anderen Elementformen können ebenfalls mit Mittenknoten oder ohne Mittenknoten sein. Bei der Vernetzung der Geometrie werden Radien in der Geometrie vorteilhaft so abgebildet, dass bei quadratischen Tetraederelementen idealerweise 4-5 Elemente zur Abbildung eines Radius von 90 Grad verwendet werden, und bei linearen Tetraederelementen z.B. 9-11, z.B. 10 Elemente.

Wie bereits erwähnt, werden bei den o.g. Varianten der Erfindung zur Untersuchung des jeweiligen Zahnersatzteil-Entwurfs mittels des FEM-Simulations-Softwareprogramms beim späteren realen Einsatz des Zahnersatzteils auftretende mechanische Belastungen simuliert, und dabei die Stärke und Schwäche der jeweiligen Dimensionierung ermittelt.

Hierbei können Spannungsberechnungen und Weiteres auf Basis vordefinierter Krafteinleitung durchgeführt werden.

Hierzu können z.B. die folgenden Spannungstypen untersucht bzw. verwendet werden:

Für keramische Werkstoffe kann für die Zugbelastung z.B. die 1. Hauptspannung bzw. die 1. Hauptdehnung verwendet bzw. ausgewertet werden, und für die Druckbelastung die 3. Hauptspannung bzw. die 3. Hauptdehnung - eine Untersuchung von anderen Spannungstypen wie "von-Mises"-Spannungen oder Vergleichsspannungen kann vorteilhaft unterbleiben.

Bei auf keramischen Werkstoffen basierenden Brücken, Kronen, etc. können vor allem die 1. / 3. Hauptspannungen am - mechanisch kritischen - Übergang zwischen Steg bzw. Verbinder und Glied bzw. Element untersucht werden.

Demgegenüber können bei FEM-Simulationen für Zahnersatzteile aus metallischen Werkstoffen vorteilhaft Vergleichsspannungen für den Zug und den Druck untersucht werden.

Die Auslegung bei Kunststoffen / Polymeren kann gegen die Fließdehngrenze unter Berücksichtigung eines Sicherheitsfaktors erfolgen.

Als für die jeweilige FEM-Simulation verwendete kritische Größen, die zu einem Bruch des jeweiligen Zahnersatzteils führen können, können die vom jeweiligen Material-Hersteller gelieferten Materialwerte verwendet werden, und/oder Ergebnisse aus entsprechenden Zug-, Druck- und Biegeversuchen (z.B. entsprechenden 3- oder 4-Punkt-Biegeversuchen), wobei die jeweiligen Werte / Ergebnisse vorteilhaft mit einem entsprechend gewählten zusätzlichen Sicherheitsfaktor beaufschlagt werden bzw. werden können. Um die Versagenswahrscheinlichkeit von keramischen Werkstoffen auszuwerten, kann vorteilhaft die Weibull-Theorie verwendet werden. Insbesondere kann bei Keramiken an die Stelle des Begriffs Festigkeit der Begriff der Bruchwahrscheinlichkeit treten. Bei Kunstoffen kann die Fließdehngrenze als kritische Größe ermittelt werden. Bei Metallen kommen z.B. Vergleichspannungshypothesen (wie z.B. die Gestaltsänderungs-Energie- (von Mises-) Hypothese zum Einsatz.

Die Bestimmung der Krafteintrittspunkte für die o.g. Spannungsberechnungen auf Basis vordefinierter Krafteinleitung kann erfolgen:
a) Automatisch über entsprechende Voreinstellungen des jeweiligen FEM-Softwareprogramms; und/oder
b) Über die manuelle Auswahl der Krafteintrittspunkte durch den jeweiligen Anwender; und/oder
c) Über einen virtuellen Artikulator; und/oder
d) Über einen virtuellen Artikulator und durch definierte Krafteintrittspunkte oder - flächen;
e) Automatisch über Kontaktpunkte gegenüberliegender Zähne, die z.B. vom CAD-System ermittelt werden.

Die zur Simulation verwendete Lagerung erfolgt z.B. über Festlager und/oder Loslager oder eine beliebige Kombination hiervon. Alternativ oder zusätzlich kann die Lagerung auch elastisch über Federn erfolgen. Die Elastizität kann dabei z.B. auf Basis der Knochendichte ermittelt werden, da zwischen der Elastizität und der Knochendichte eine Korrelation besteht.

Die Lagerung/Fixierung kann bei einer Brücke ohne Pfeiler z.B. - wie in Figur 4 veranschaulicht - in entsprechenden Hohlräumen 15a, 15b (in Figur 4 gestrichelt dargestellt) von Brücken-Gliedern bzw. -Elementen 11a, 11b erfolgen.

Bei Brücken mit Pfeilern kann - wie in Figur 3 veranschaulicht - die Lagerung/Fixierung 15a', 15b' (in Figur 3 gestrichelt dargestellt) unten (bzw. bei anderen Ausführungsbeispielen alternativ z.B. auch oben) an den entsprechenden Pfeilern 14a, 14b erfolgen. Die Brücke wird über in der entsprechenden FEM-Simulation definierbare Kontaktformulierungen an den Pfeilern gelagert (d.h. an der Kontaktstelle Pfeiler / Brücke).

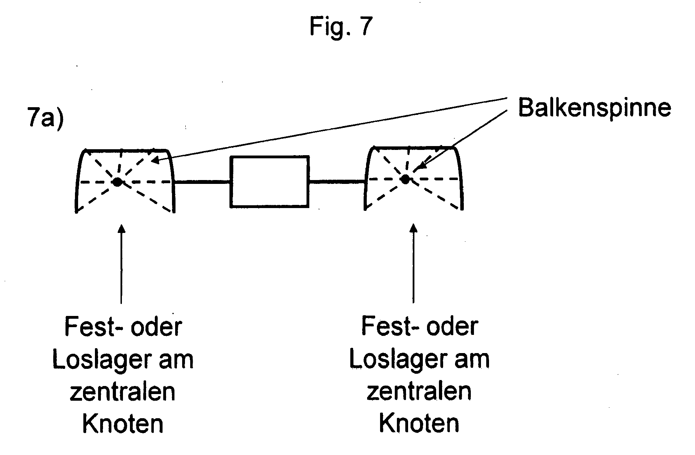

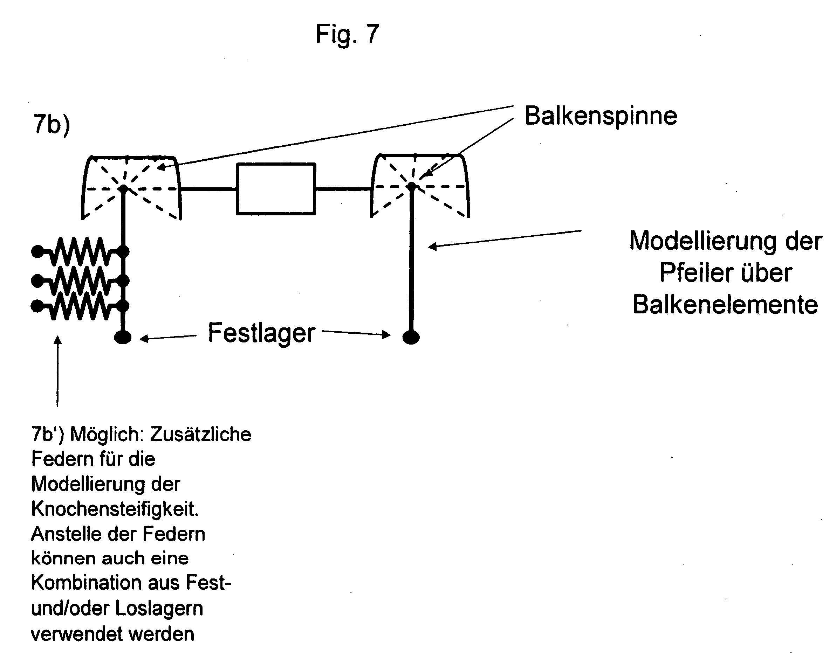

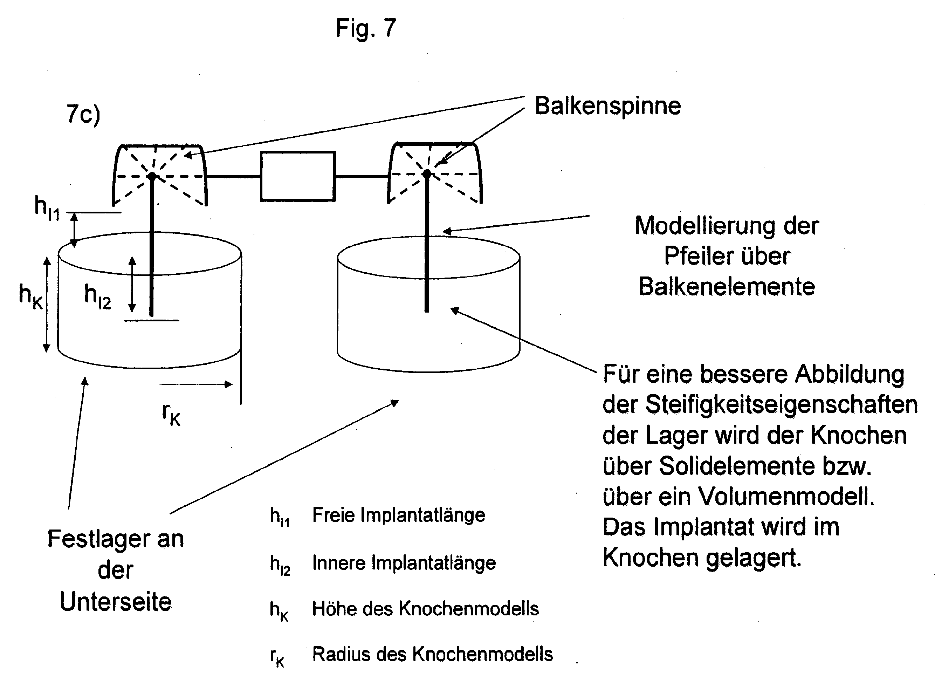

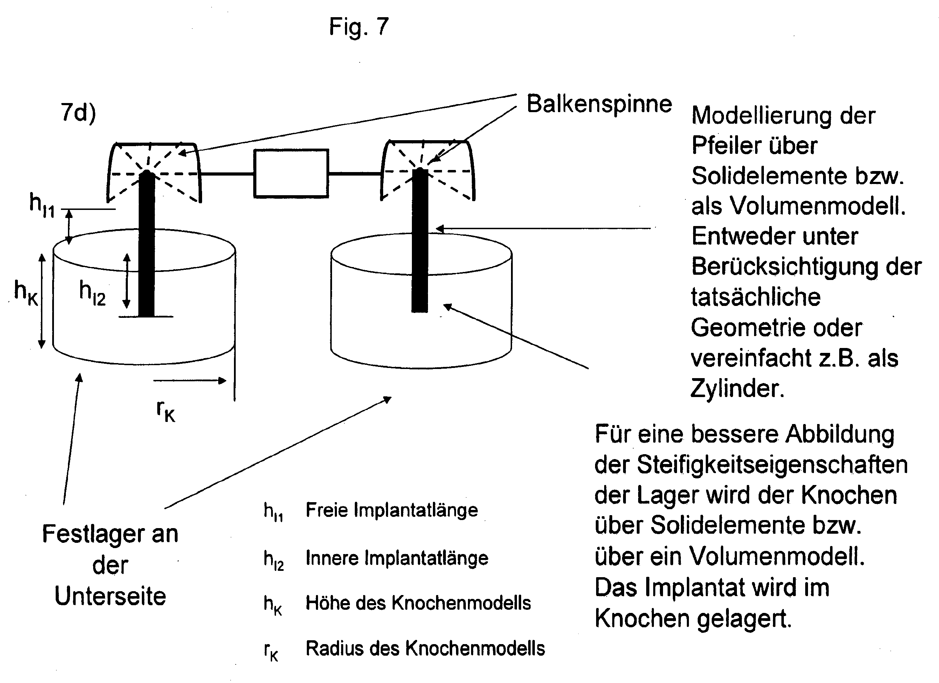

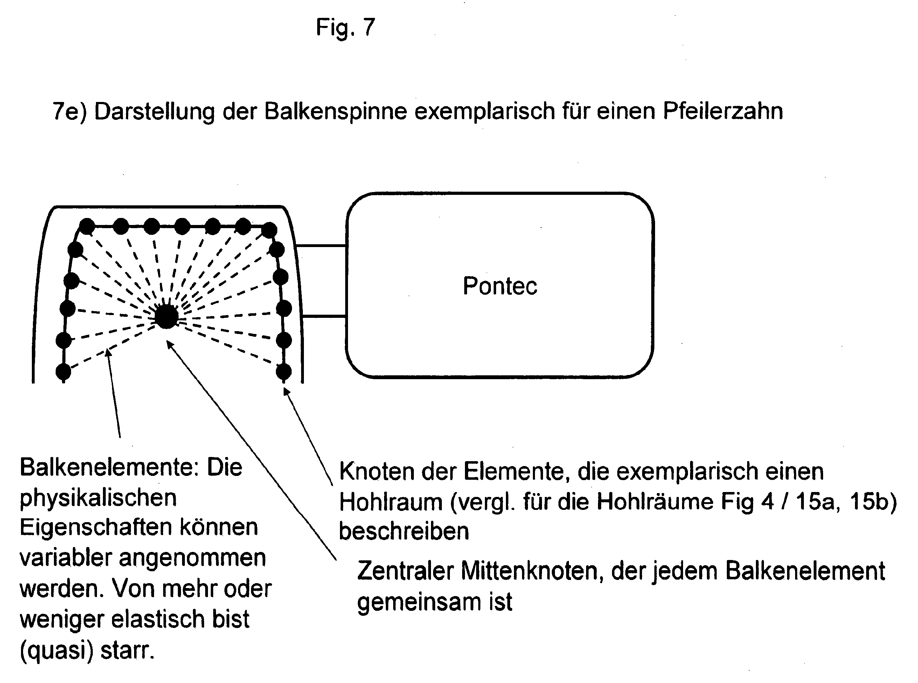

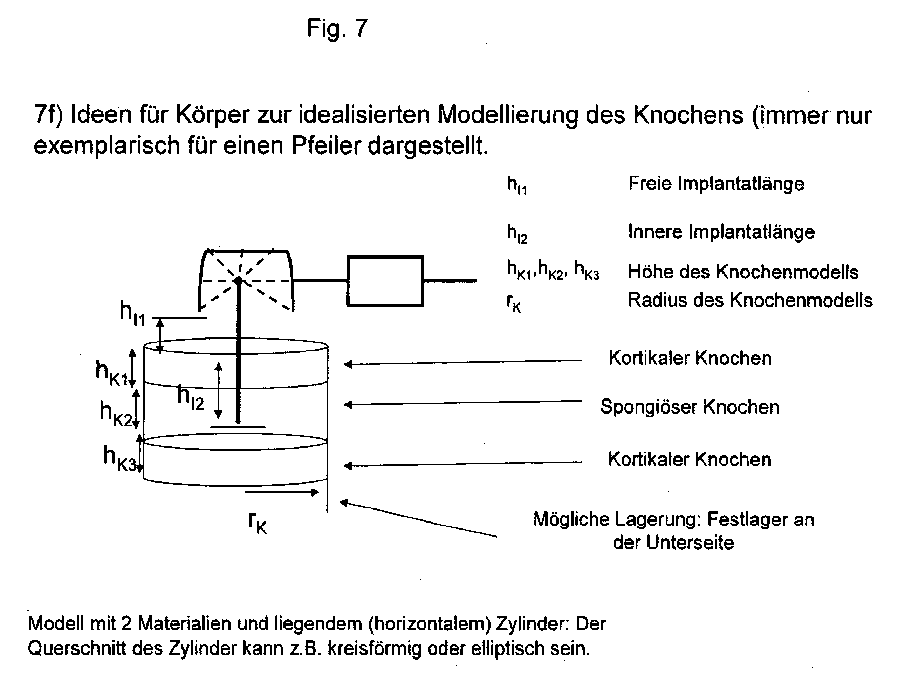

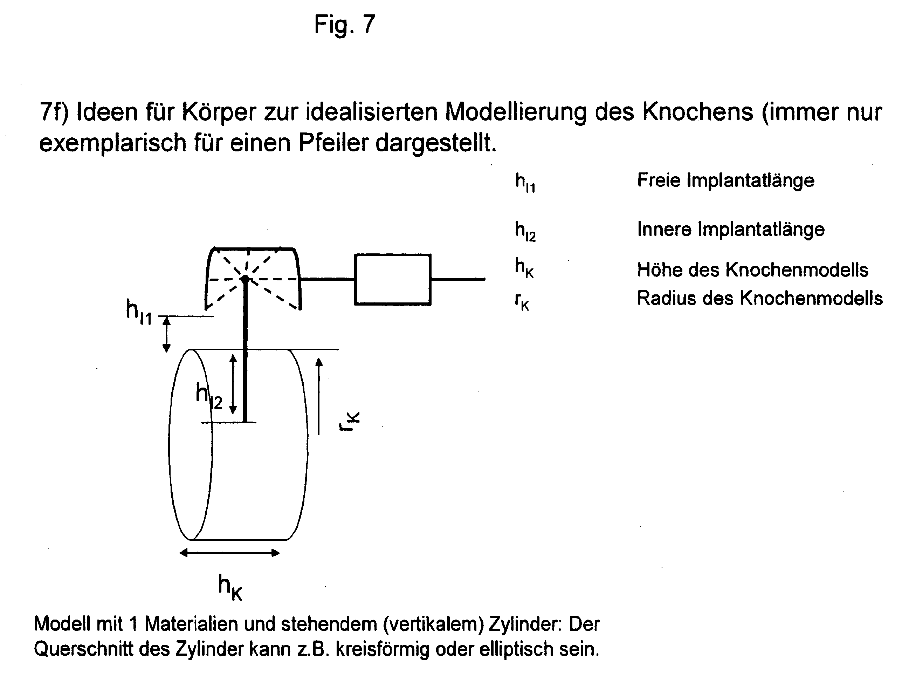

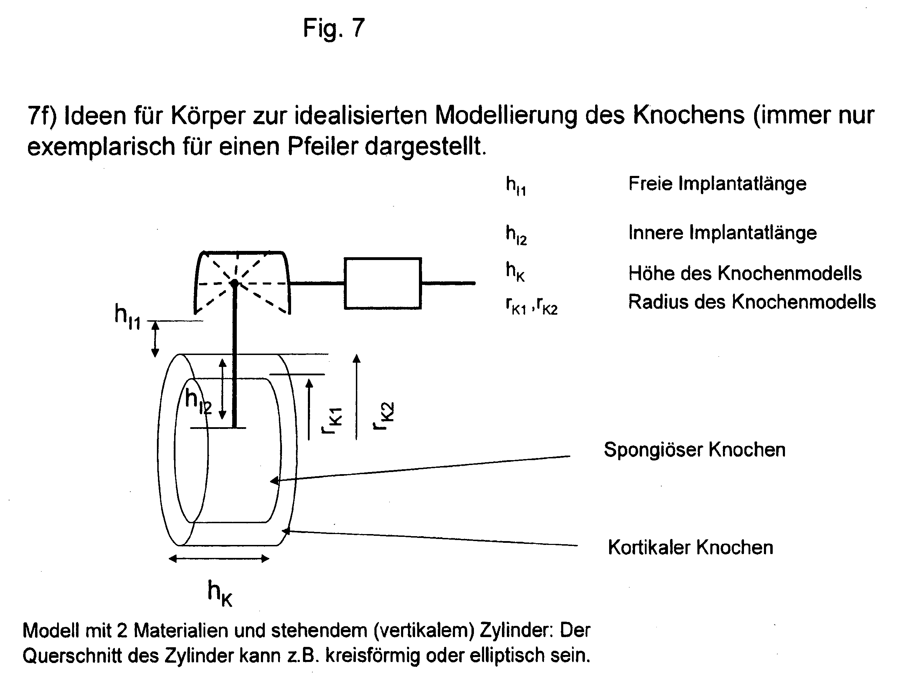

Wird das Zahnersatzteil mit Pfeilern gelagert gibt es mehrere Alternativen. Das Zahnersatzteil kann zum Beispiel - wie in Figur 7, Bild a veranschaulicht - über eine Balkenspinne gelagert werden.

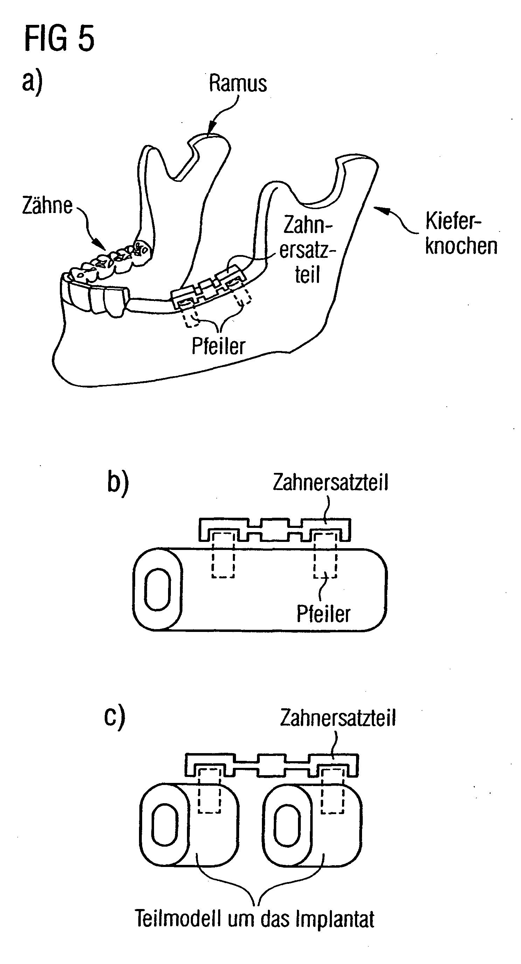

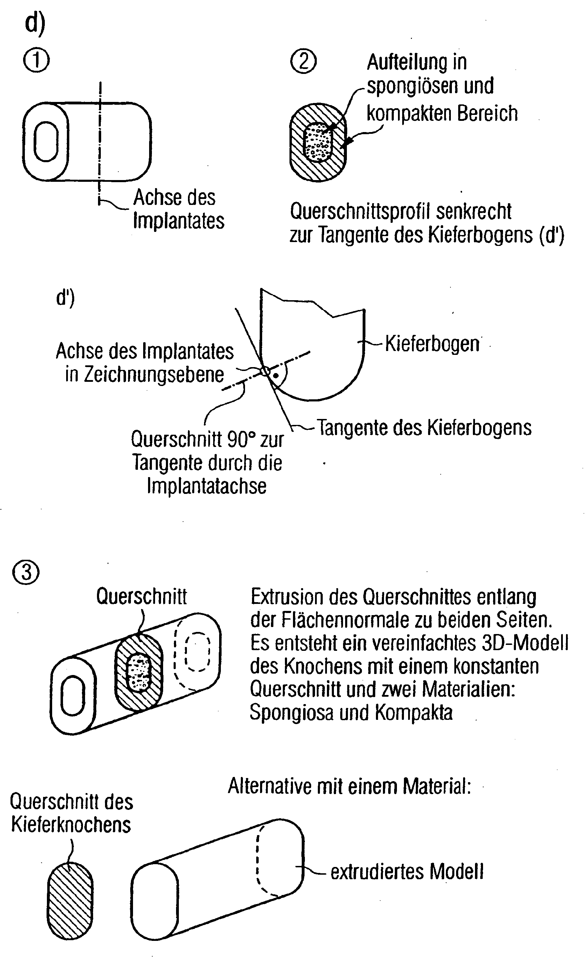

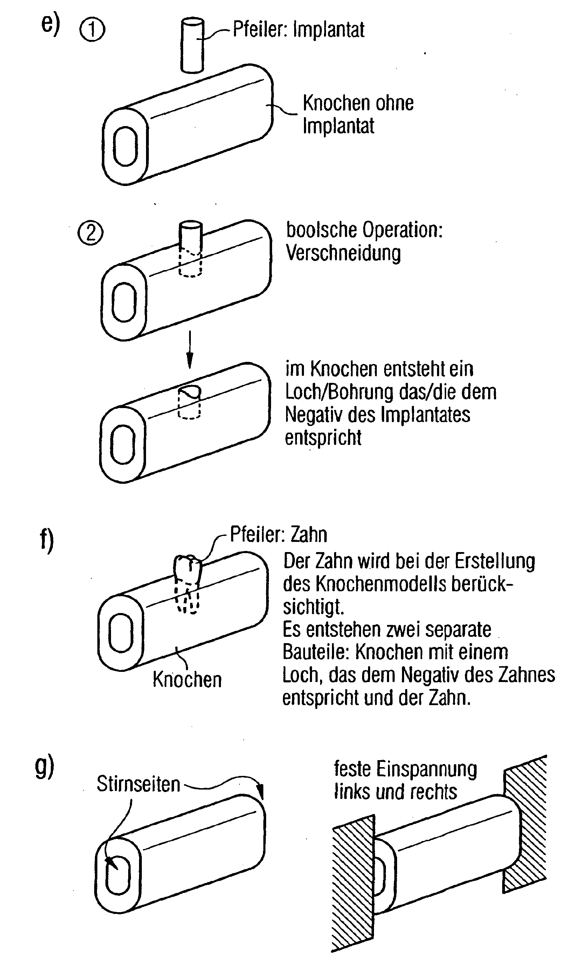

Dabei werden die Knoten in (den in Figur 4 dargestellten Hohlräumen 15a, 15b entsprechenden) Hohlräumen über entsprechende Balkenelemente oder "constraint equations" (Kopplung der Knoten über mathematische Gleichungen) mit einem zentralen Mittenknoten verbunden. Der Mittenknoten kann auf verschiedene Weise gelagert werden. Die geometrischen Eigenschaften (z.B. Querschnitt der Balkenelemente) und die Materialeigenschaften (z.B. Elastizitätsmodul, Querkontraktionszahl) können - wie in den Ausführungen weiter unten genauer erläutert - im Prinzip beliebig gewählt werden.
I) Beispielsweise wird für jeden Pfeiler (Zahn/Implantat) eine Balkenspinne erstellt, wobei die zentralen Mittenknoten wie in Figur 7, Bild a veranschaulicht über ein Loslager oder Festlager fixiert werden können. Jede Kombination aus fest- oder losgelagerten zentralen Mittenknoten ist denkbar.
II) Gemäß einem weiteren Beispiel kann auch entsprechend ähnlich wie in Bezug auf Figur 7, Bild a erläutert vorgegangen werden, wobei jedoch wie in Figur 7, Bild b veranschaulicht der Pfeiler (Zahn/Implantat) über die Balkenelemente mit abgebildet wird. Der Vorteil ist, dass man die Steifigkeitseigenschaften des Implantates bzw. des Pfeilerzahnes mit berücksichtigen kann. Die physikalischen Eigenschaften der Balkenelemente hängen in erster Linie von den tatsächlichen Gegebenheiten ab und können dementsprechend berücksichtigt werden. Somit können je nach Pfeilerart die physikalischen Eigenschaften der Balkenelemente variieren. Handelt es sich bei dem Pfeiler z.B. um ein Titanimplantat mit dem Durchmesser von 3 mm, könnten z.B. Balkenelemente mit kreisförmigem Querschnitt (Durchmesser 3mm) und einem Elastizitätsmodul von ca. 110.000 MPa und einer Querkontraktionszahl von ca. 0,3 verwendet werden. Handelt es sich demgegenüber bei dem Pfeiler um einen Zahn, könnte den Balkenelementen die mittleren Steifigkeitseigenschaften und der mittlere Durchmesser des Zahnes zu Grunde gelegt werden. Um die Modellierung zu vereinfachen, ist es möglich, für jeden Pfeiler die gleichen physikalischen Eigenschaften zugrunde zulegen. Beispielsweise werden Eigenschaften bevorzugt, die in der Simulation einen "worst case" erwarten lassen, um sicher zu gehen, dass das letztlich basierend auf der Simulation erstellte Zahnersatzteil ausreichend stabil ist.
   Die Balkenelemente der Pfeiler können entsprechend wie anhand von Figur 7, Bild b veranschaulicht gelagert werden. Bei dieser Lagerung werden die Endknoten der Balkenelemente als Festlager fixiert. Alternativ ist es auch möglich, insbesondere um die Eigenschaften des um das Implantat liegenden Knochens zu berücksichtigen, so wie in Figur 7, Bild b' veranschaulicht weitere Knoten der Balkenelemente über Federelemente zu lagern. Die Federn können dabei insbesondere die Eigenschaften des Knochens aufweisen. Es können stattdessen alternativ aber auch in Bezug hierauf vereinfachte Eigenschaften angenommen werden. Anstelle der Federn können z.B. auch entsprechende Lagerungen, z.B. Loslager oder Festlager eingesetzt werden. Hier ist jede Kombination möglich.
   Die Länge der idealisierten Pfeiler kann der tatsächlichen Länge der Pfeiler entsprechen. Auch hier gilt: die Länge der modellierten Pfeiler darf beliebig sein. Es empfiehlt sich aber von der tatsächlichen Länge nicht zu stark abzuweichen.
III) Gemäß einem weiteren Beispiel kann auch entsprechend ähnlich wie in Bezug auf Figur 7, Bild b erläutert vorgegangen werden, wobei jedoch wie z.B. anhand von Figur 7, Bild c veranschaulicht eine realistischere Lagerung der Implantate vorgenommen wird. Dazu kann der um das Implantat liegende Knochen über Solidelemente modelliert werden. Dadurch können die Steifigkeitseigenschaften des Knochens berücksichtigt werden. Dies kann von Vorteil sein, da die Steifigkeit des Knochens einen Einfluss auf die Simulations-Ergebnisse hat. Die Materialeigenschaften der Solidelemente können denen des Knochens entsprechen. Sie können aber auch vereinfacht angenommen werden. So können als Materialeigenschaften die Materialeigenschaften von spongiösen und von kortikalen Knochen verwendet werden. Spongiöser Knochen hat typischerweise ein Elastizitätsmodul von 1.500 MPa (Querkontraktionszahl 0,3), und kortikaler Knochen ca. 15.000 MPa (Querkontraktionszahl 0,3). Die Werte können aber stark streuen. Alternativ kann statt zwei verschiedenen Materialeigenschaften (nämlich denjenigen von spongiösem, und von kortikalem Knochen) zur Simulation auch nur eine Materialeigenschaft verwendet werden. Auch hier empfiehlt es sich, die Materialeigenschaft so zu wählen, dass ein entsprechendes "worst case" Szenario simuliert wird.
   Im Prinzip ist die Wahl der Materialparameter beliebig. Es sollte aber darauf geachtet werden, dass die Werte nicht zu sehr von der Realität abweichen.
   Die in Figur 7, Bild c veranschaulichte "Freie Implantatlänge" h_{I1} und die "Innere Implantatlänge" h_{I2} kann beliebig sein (h_{I1} und h_{I2} beeinflussen sich gegenseitig und hängen von der gewählten Implantatlänge ab). Sie sollten aber von der Realität nicht zu sehr abweichen. In Realität kann die freie Implantatlänge h_{I1} ca. 1-2 mm betragen.
   Der idealisierte Knochen ist in Figur 7, Bild c als horizontal liegender Zylinder dargestellt. Er kann aber auch andere Formen haben, z.B. - wie in Figur 7, Bild f dargestellt - vertikal liegen, und/oder kann einen elliptischen Querschnitt aufweisen, und/oder er kann zusätzlich auch aus ein oder zwei oder mehreren verschiedenen Materialien bestehen, je nachdem wie genau der Knochen modelliert werden soll.
   Die Abmaße des idealisierten Knochens sind im Prinzip frei wählbar. In Figur 7, Bild c ist hₖ die Höhe und rₖ der Radius des als liegender Zylinder dargestellten Knochens. Die Höhe hₖ kann ca. 5 mm bis 10 mm betragen, und der Radius rₖ ca. 5 mm.
   Je nachdem welche geometrische Form als idealisierter Knochen gewählt wird, sollten die Abmaße in einem physiologisch sinnvollen Rahmen liegen.
   Die Lagerung der idealisierten Knochen hängt vom verwendeten geometrischen Körper ab. Bei dem in Figur 7, Bild c dargestellten horizontal liegenden Zylinder können die Knoten an der Unterseite über Festlager fixiert werden. Wir z.B. ein stehender Zylinder verwendet, können - wie in Figur 7, Bild f dargestellt - z.B. die Knoten der Stirnflächen fixiert werden.
IV) Gemäß einem weiteren Beispiel kann auch entsprechend ähnlich wie in Bezug auf Figur 7, Bild c erläutert vorgegangen werden, wobei jedoch die Pfeiler (Zahn/Implantat) über Solidelemente, also Volumenmodelle abgebildet werden. Die Implantate können entweder nach ihrer tatsächlichen Geometrie oder vereinfacht z.B. über Zylinder mit konstantem oder auch variierendem Durchmesser abgebildet werden. Das gleicht gilt für Zähne. Die Materialeigenschaften der Pfeiler sollten sich soweit wie möglich an den tatsächlichen Gegebenheiten orientieren. Es ist aber durchaus möglich, insbesondere für die Zähne, deren Eigenschaften nicht so gut definierbar sind wie bei Implantaten, Mittelwerte wie sie z.B. in der Literatur zu finden sind zu nutzen.
V) Alternativ kann die Lagerungen der Pfeiler in den Knochen auch entsprechend wie in Figur 5 dargestellt erfolgen.

Wird das Zahnersatzteil mit Pfeilern (Zahn/Implantat) gelagert, kann für die Lagerung der Pfeiler ebenfalls die tatsächliche Situation bestehend aus Kieferknochen, Implantat und der Brücke abgebildet werden. Um diese Modelle aufzubauen werden z.B. Implantatplanungstools wie z.B. CoDiagnostiX der Fa. IVS Solutions, Chemnitz, verwendet.

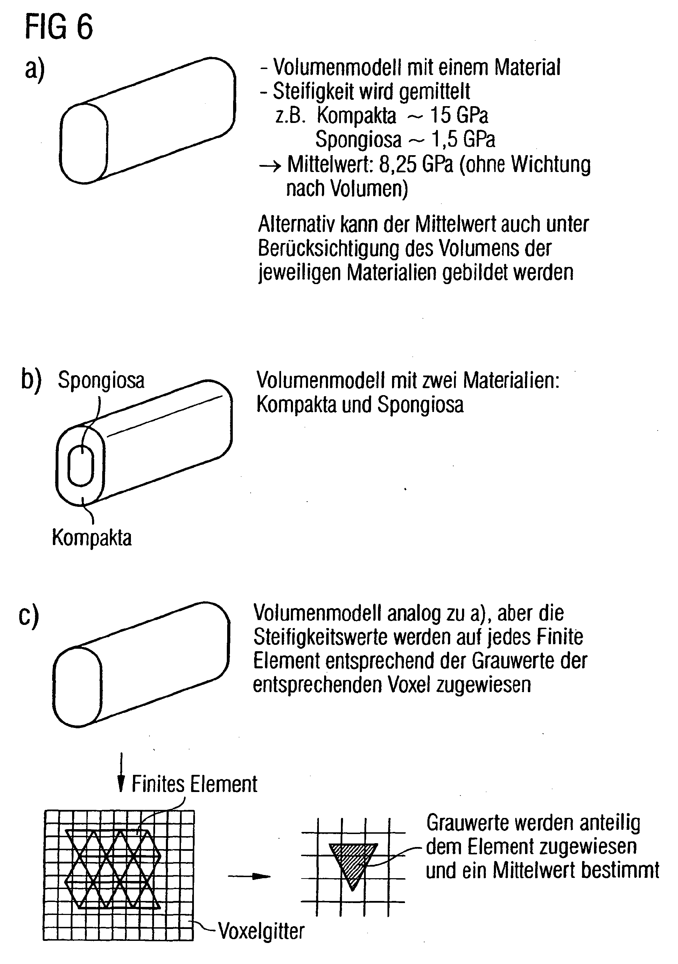

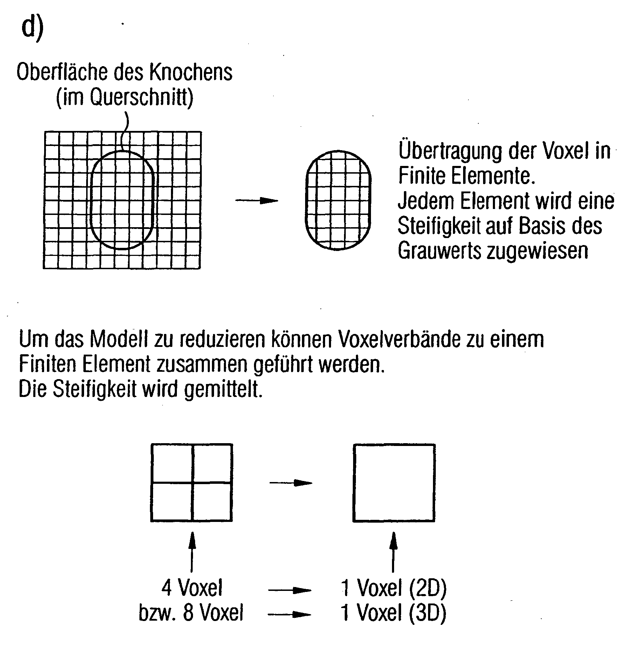

Der Vorteil liegt darin, dass die Implantate genau in der Position (Einsetztiefe, Einsetzwinkel) berücksichtigt werden, wie sie später auch beim Patienten eingesetzt werden. Außerdem werden die elastischen Eigenschaften der Lagerung der Implantate im Knochen realistischer abgebildet. Das ist wichtig, da die Elastizität der Lagerung der Implantate einen Einfluss auf das Deformationsverhalten des Zahnersatzteiles hat.
I) Die Erstellung der Knochengeometrie kann auf verschiedene Arten erfolgen:
   a) Es wird ein Modell des gesamten Kieferknochens erzeugt (Fig. 5, Bild a).
   b) Es wir ein Modell des Kieferknochens im Bereich des untersuchten Zahnersatzteils erzeugt (Fig. 5, Bild b).
   c) Es wird ein Modell des Kieferknochens abschnittsweise erstellt, d.h. es wird ein Modell des Kieferknochens um das Implantat erzeugt (Fig. 5, Bild c).
   d) Wie c). Jedoch wird ein vereinfachtes geometrisches 3D Modell des Kiefers erzeugt. Hierzu wird aus einem Querschnitt des Kiefers (senkrecht zur Tangente des Kieferbogens und in der Längsachse des Implantates) ein 2D Profil bestehend aus dem kompakten und spongiösen Knochen erstellt. Dieses 2D Profil wird dann nach beiden Seiten extrudiert, so dass ein vereinfachtes 3D-Modell mit einem konstanten Querschnitt und zwei Materialien entsteht (Fig. 5, Bild d). Alternativ kann der Querschnitt auch nur aus der Außenkontur bestehen, so dass ein Material entsteht.
II) Berücksichtigung der Pfeiler:
   a) Handelt es sich bei dem Pfeiler um ein Implantat, so wird es über boolsche Operationen (z.B. Verschneidung) in den Kiefer gesetzt (Fig. 5, Bild e).
   b) Handelt es sich bei dem Pfeiler um einen Zahn, so wird er bei der Modellerstellung des Knochens berücksichtigt und als eigenes "Bauteil" betrachtet (Fig. 5, Bild f).
III) Lagerung:
   a) Die Lagerung der Varianten b) - d) erfolgt an den Stirnseiten über bspw. zwei Festlager (Fig. 5, Bild g). Andere Kombinationen aus Lagerbedingungen sind auch möglich.
   b) Die Lagerung in Variante a) kann am Ramus des Kiefers erfolgen.
IV) Die Erstellung des FEM Modells auf Basis der Knochengeometrie (siehe o.g. Punke I, a-d) kann auf jeweils verschiedene Arten erfolgen:
   a) Die zwei Materialien Spongiosa und Kompakta des Knochens werden als ein homogenes Material betrachtet. Die Materialeigenschaften werden aus den Steifigkeitswerten des kompakten und des spongiösen Knochens gemittelt und können ggf. noch nach dem Volumen gewichtet werden. Die Werte können entweder aus Standardwerten aus der Literatur ermittelt werden oder alternativ aus den durchschnittlichen Steifigkeitswerten, die aus den Grauwerten bestimmt werden. Die Grauwerte korrelieren bis zu einem gewissen Maß mit dem E-Modul des Knochens (Fig. 6, Bild a).
   b) Der Knochen wird in seine zwei Materialien aufgeteilt: den spongiösen und den kompakten Knochen. Den Materialien werden als Steifigkeitswerte entweder Standardwerte aus der Literatur zugewiesen oder alternativ werden durchschnittliche Steifigkeitswerte aus den Grauwerten bestimmt. Die Grauwerte korrelieren bis zu einem gewissen Maß mit dem E-Modul des Knochens (Fig. 6, Bild b).
   c) Es wird das gesamte Volumen des Knochens vernetzt. Auf die jeweiligen Elemente werden die Steifigkeitswerte auf Basis der Grauwerte gemappt (Fig. 6, Bild c).
   d) Es wird ein FEM Modell auf Basis des Voxelgitters erzeugt. Dabei entspricht ein Voxel einem Finiten Element. Dem Finiten Element wird dann eine Steifigkeit auf Basis des Grauwertes des Voxels zugewiesen. Um zu vermeiden, dass das Modell zu groß wird können auch mehrere Voxel zu einem Finiten Element zusammengeführt werden. Die Steifigkeit des Elements ergibt sich dann aus einem Durchschnittswert der Grauwerte der zusammengefassten Voxel. Elemente in Randbereichen können ggf. geglättet und in Tetraederelemente bzw. Pentaederelemente überführt werden um eine "glatte" Oberfläche zu erhalten. (Fig. 6, Bild d)
V) Material:
   a) Handelt es sich bei dem Pfeiler um ein Implantat, werden die vom Hersteller angegebenen Materialwerte zugrunde gelegt.
   b) Handelt es sich um einen Zahn, so werden ihm bspw. Materialeigenschaften aus der Literatur zugewiesen.
   c) Für die Materialeigenschaften in den o.g. Punkten IV, a-b werden bspw. linear-isotrope oder nicht-linear-isotrope oder aber alternativ auch nichtlineare-anisotrope oder linear-anisotrope Materialgesetze verwendet. Für die Materialeigenschaften in den o.g. Punkten IV, c-d werden in aller Regel linear-isotrope Materialeigenschaften zugrunde gelegt.
VI) Kontakt:
   a) Das Implantat und der Kochen werden über einen, in den FEM Programmen üblicherweise vorhandenen Kontaktalgorithmus, verbunden, z.B. über das Pure-Penalty Verfahren oder über die Kopplung der Freiheitsgrade der sich in Kontakt befindenden Knoten (Constraint Kontakt).

## Patentansprüche

1. Verfahren zur Verarbeitung von Daten, die Zahnersatzteile betreffen, das die Schritte aufweist:
Erzeugen digitaler Daten, die eine Situation in einem Mund repräsentieren;
Erzeugen digitaler Daten, die ein Zahnersatzteil repräsentieren, unter Verwendung der digitalen Daten, die die Situation in dem Mund repräsentieren;
Erzeugen von zur Herstellung des Zahnersatzteils verwendbaren digitalen CAM-(Computer Aided Manufacturing-) Produktions-Daten, die die Rundheit eines Fräskopfes berücksichtigende Fräsbahndaten enthalten unter Verwendung der digitalen Daten, die das Zahnersatzteil repräsentieren;
Durchführen einer FEM- (Finite-Elemente-Methode-) Simulation basierend auf den digitalen CAM- (Computer Aided Manufacturing-) Produktions-Daten.

2. Verfahren nach Anspruch 1, wobei bei der FEM- (Finite-Elemente-Methode-) Simulation die Stabilität des Zahnersatz teils untersucht wird, insbesondere der Gerüst- und/oder Verblendkonstruktion des Zahnersatzteils.

3. Verfahren nach Anspruch 2, wobei die Stärke und/oder Schwäche der jeweiligen Dimensionierung von einzelnen Abschnitten des Zahnersatzteils mit Hilfe einer entsprechenden Farb- und/oder Helligkeits-Skalierung an einem Bildschirm angezeigt wird.

4. Verfahren nach Anspruch 2 oder 3, wobei bei der Untersuchung der Stabilität des Zahnersatzteils, insbesondere der Stabilität der Gerüst- und Verblendkonstruktion des Zahnersatzteils für keramische Werkstoffe für die Zugbelastung die 1. Hauptspannung bzw. die 1. Hauptdehnung, und für die Druckbelastung die 3. Hauptspannung bzw. die 3. Hauptdehnung verwendet bzw. ausgewertet wird.

5. Verfahren nach Anspruch 2 oder 3, wobei bei der Untersuchung der Stabilität des Zahnersatzteils, insbesondere der Stabilität der Gerüst- und Verblendkonstruktion des Zahnersatzteils für metallische Werkstoffe Vergleichsspannungen für den Zug und den Druck verwendet bzw. ausgewertet werden.

6. Vorrichtung, welche aufweist:
Mittel zum Erzeugen digitaler Daten, die ein Zahnersatzteil repräsentieren, unter Verwendung digitaler Daten, die eine Situation in einem Mund repräsentieren;
Mittel zum Erzeugen von zur Herstellung des Zahnersatzteils verwendbaren digitalen CAM-(Computer Aided Manufacturing-) Produktions-Daten, die die Rundheit eines Fräskopfes berücksichtigende Fräsbahndaten enthalten unter Verwendung der digitalen Daten, die das Zahnersatzteil repräsentieren; und
Mittel zum Durchführen einer FEM- (Finite-Elemente-Methode-) Simulation basierend auf den digitalen CAM- (Computer Aided Manufacturing-) Produktions-Daten.

7. Computerlesbares Medium mit durch einen Computer ausführbaren Programm-Code-Anweisungen zum Ausführen eines Verfahrens nach einem der Ansprüche 1 - 5.

8. Computerprogramm mit Programmcode-Mitteln zum Durchführen eines Verfahrens nach einem der Ansprüche 1 - 5, wenn das Programm auf einem Computer ausgeführt wird.

## Claims

1. A method for processing data relating to dental prosthesis parts, comprising the steps of:
generating digital data representing a situation in a mouth;
generating digital data representing a dental prosthesis part, using the digital data representing the situation in the mouth;
generating digital CAM (Computer Aided Manufacturing) production data usable for producing the dental prosthesis part and comprising milling path data taking into account the roundness of a milling head, using the digital data representing the dental prosthesis part;
performing a FEM (Finite Element Method) simulation based on the digital CAM (Computer Aided Manufacturing) production data.

2. The method according to claim 1, wherein the stability of the dental prosthesis part, in particular the frame and/or veneer construction of the dental prosthesis part, is examined during FEM (Finite Element Method) simulation.

3. The method according to claim 2, wherein the strength and/or weakness of the respective dimensioning of individual sections of the dental prosthesis part is displayed on a screen by means of an appropriate color and/or brightness scaling.

4. The method according to claims 2 or 3, wherein, during the examination of the stability of the dental prosthesis part, in particular the stability of the frame and veneer construction of the dental prosthesis part, for ceramic materials the 1^{st} principal tension and/or the 1^{st} principal strain is used and/or evaluated for the tensile strain, and the 3^{rd} principal tension and/or the 3^{rd} principal strain is used for the pressure load.

5. The method according to claims 2 or 3, wherein, during the examination of the stability of the dental prosthesis part, in particular the stability of the frame and veneer construction of the dental prosthesis part, for metal materials equivalent stresses for the tension and the pressure are used and/or evaluated.

6. A device comprising:
means for generating digital data representing a dental prosthesis part, using digital data representing a situation in a mouth;
means for generating digital CAM (Computer Aided Manufacturing) production data usable for producing the dental prosthesis part and comprising milling path data taking into account the roundness of a milling head, using the digital data representing the dental prosthesis part; and
means for performing a FEM (Finite Element Method) simulation based on the digital CAM (Computer Aided Manufacturing) production data.

7. A computer-readable medium comprising computer-executable program code instructions for performing a method according to any of claims 1 to 5.

8. A computer program comprising program code means for performing a method according to any of claims 1 to 5 when the program is executed on a computer.

## Revendications

1. Procédé de traitement de données qui concernent des prothèses dentaires, lequel comprend les étapes suivantes :
génération de données numériques qui représentent une situation dans une bouche ;
génération de données numériques qui représentent une prothèse dentaire en utilisant les données numériques représentant la situation dans la bouche ;
génération de données numériques de production FAO (fabrication assistée par ordinateur) utilisables pour la fabrication de la prothèse dentaire qui contiennent des données de trajectoire de fraisage tenant compte de la rotondité d'une tête de fraisage en utilisant les données numériques qui représentent la prothèse dentaire ;
réalisation d'une simulation FEM (méthode des éléments finis) sur la base des données numériques de production FAO (fabrication assistée par ordinateur).

2. Procédé selon la revendication 1, dans lequel la simulation FEM (méthode des éléments finis) consiste à étudier la stabilité de la prothèse dentaire, en particulier de la construction d'armature et/ou de parement de la prothèse dentaire.

3. Procédé selon la revendication 2, dans lequel la force et/ou la faiblesse du dimensionnement respectif de parties individuelles de la prothèse dentaire est affichée sur un écran à l'aide d'une échelle de couleur et/ou de brillance correspondante.

4. Procédé selon la revendication 2 ou 3, dans lequel, lors de l'étude de la stabilité de la prothèse dentaire, en particulier de la stabilité de la construction d'armature et/ou de parement de la prothèse dentaire, on utilise ou évalue, pour des matériaux céramiques, la 1^{ère} contrainte principale, respectivement le 1^{er} allongement principal, pour la contrainte de traction, et la 3^{e} contrainte principale, respectivement le 3^{e} allongement principal, pour la contrainte de pression.

5. Procédé selon la revendication 2 ou 3, dans lequel, lors de l'étude de la stabilité de la prothèse dentaire, en particulier de la stabilité de la construction d'armature et/ou de parement de la prothèse dentaire, on utilise ou évalue, pour des matériaux métalliques, des contraintes de comparaison pour la traction et la pression.

6. Dispositif, lequel comprend :
des moyens pour générer des données numériques qui représentent une prothèse dentaire en utilisant des données numériques représentant une situation dans une bouche ;
des moyens pour générer des données numériques de production FAO (fabrication assistée par ordinateur) utilisables pour la fabrication de la prothèse dentaire qui contiennent des données de trajectoire de fraisage tenant compte de la rotondité d'une tête de fraisage en utilisant les données numériques qui représentent la prothèse dentaire ; et
des moyens pour réaliser une simulation FEM (méthode des éléments finis) sur la base des données numériques de production FAO (fabrication assistée par ordinateur).

7. Support lisible par ordinateur avec des instructions de code de programme exécutables par un ordinateur pour réaliser un procédé selon l'une des revendications 1 à 5.

8. Programme d'ordinateur avec des moyens de code de programme pour réaliser un procédé selon l'une des revendications 1 à 5 lorsque le programme est exécuté sur un ordinateur.
